# FASCICULE DE BREVET EUROPEEN

(11) **EP 0 711 262 B1**
(45) Date de publication et mention de la délivrance du brevet: **05.08.1998**
(21) Numéro de dépôt: 95920974.3
(22) Date de dépôt: 22.05.1995
(51) Int. Cl.: C04B 37/02, C04B 37/00, B23K 35/28, B23K 23/00

(54) **PROCEDE ET COMPOSITION POUR L'ASSEMBLAGE DE PIECES EN CERAMIQUE ET EN ALLIAGE REFRACTAIRE**
VERFAHREN UND ZUSAMMENSETZUNG ZUR VERBINDUNG VON TEILEN AUS KERAMIK UND FEUERFESTER LEGIERUNG
PROCESS AND COMPOSITION FOR ASSEMBLING PART MADE OF CERAMIC AND REFRACTORY ALLOY

(30) Priorité: 25.05.1994 FR 9406344
(43) Date de publication de la demande: 15.05.1996
(73) Titulaire: OFFICE NATIONAL D'ETUDES ET DE RECHERCHES AEROSPATIALES, 92320 Chatillon Cédex (FR)
(72) Inventeur: JOSSO, Pierre, F-92130 Issy-les-Moulineaux (FR); ALPERINE, Serge, F-75004 Paris (FR)
(74) Mandataire: Rousset, Jean-Claude
(86) Numéro de dépôt international: FR9500671
(87) Numéro de publication internationale: WO9532163

(56) Documents cités:
- EP-A- 0 109 814
- WO-A-94/16859
- DE-A- 3 520 923
- FR-A- 757 901
- FR-A- 2 084 497
- GB-A- 579 515

## Description

L'invention concerne l'assemblage de pièces destinées à résister à des températures élevées, et plus particulièrement d'une pièce en céramique et d'une pièce en métal ou alliage réfractaire ou en superalliage.

On qualifie de réfractaire un métal ou un alliage qui résiste aux températures élevées - en étant si nécessaire protégé contre la corrosion - à condition de ne pas être soumis à des contraintes mécaniques notables. Un superalliage se distingue d'un alliage réfractaire en ce qu'il présente une bonne résistance mécanique notamment en fluage aux températures élevées.

Un procédé couramment utilisé pour l'assemblage d'une céramique et d'un métal est celui appelé brasage, qui consiste à appliquer un métal à l'état fondu (brasure), qui est ensuite solidifié par refroidissement. Les brasures les plus communes sont les alliages Cu-Ti-Sn et Ag-Cu. Il s'agit d'alliages possédant un point de fusion relativement bas, compris entre 600 et 850 °C, et inertes vis-à-vis des céramiques. L'assemblage obtenu ne peut être utilisé à haute température, la brasure fondant de nouveau dès que la température correspondante est atteinte, entraînant la désolidarisation des pièces.

Ceci reste vrai pour les procédés particuliers de brasage décrits dans FR-A-2 271 644 et FR-A-2 619 562, ce dernier utilisant comme brasure de l'aluminium qui fond à 660 °C et en outre brûle, c'est-à-dire s'oxyde très violemment, à cette température en présence d'oxygène.

FR-A-2 636 621 et EP-A-0 422 343 proposent des brasures ayant des températures de fusion supérieures à 900 °C. Si les assemblages obtenus résistent momentanément à des températures relativement élevées, l'oxydation ou la corrosion des brasures conduirait à la longue à une dégradation du joint.

La seule technique connue permettant de réaliser une liaison stable à haute température entre une pièce métallique et une céramique comporte la formation de la céramique par projection à la surface de la pièce. Cette technique est destinée à protéger un substrat métallique en superalliage présentant des phases γ et γ' de l'environnement thermique de la veine gazeuse d'une turbomachine aéronautique. On commence par revêtir le superalliage, par une méthode physique telle que projection plasma ou dépôt en phase vapeur sous bombardement d'électrons, d'une couche d'alliage MCrAlY, M représentant le métal de base du superalliage, nickel et/ou cobalt et/ou fer, d'une épaisseur de 100 µm environ. Le superalliage ainsi protégé est ensuite revêtu, par projection plasma, d'environ 300 µm de zircone partiellement stabilisé à l'yttrine, c'est-à-dire contenant environ 8 % en masse d'yttrine (oxyde d'yttrium Y₂O₃). Le bon accrochage mécanique du dépôt de zircone yttriée sur le MCrAlY, associé à des phénomènes physicochimiques, autorise une grande résistance aux chocs thermiques de cet ensemble (1000 cycles d'une heure à 1100 °C avec refroidissement en cinq minutes jusqu'à environ 200 °C), et ce, malgré un fort différentiel des coefficients de dilatation. Cette technique, largement décrite dans la littérature, ne permet évidemment pas d'assembler la pièce métallique à une pièce en céramique préexistante.

Le but de l'invention est de fournir un procédé permettant un tel assemblage, stable aux températures élevées.

L'invention vise notamment un procédé d'assemblage d'une première pièce en céramique et d'une seconde pièce en un matériau choisi parmi les céramiques et les matériaux métalliques réfractaires et superalliages à base d'au moins un métal choisi parmi le nickel, le cobalt, le fer et les métaux de la mine du platine, la céramique constituant la première pièce ou les deux pièces étant propre à syncristalliser, directement ou indirectement, avec la mullite, procédé dans lequel on juxtapose les deux pièces, l'intervalle qui les sépare étant garni d'une composition de scellement contenant de fines particules d'aluminium et d'un métal modérateur propre à former un alliage avec celui-ci de façon à limiter la réactivité à haute température de l'aluminium vis-à-vis des matériaux desdites pièces, et/ou d'un alliage préformé de ces deux métaux, et optionnellement d'au moins un constituant choisi parmi le silicium et la silice, lesdites particules étant dispersées dans un véhicule propre à les maintenir en place jusqu'à une température à laquelle elles réagissent entre elles et/ou avec lesdits matériaux, et on chauffe l'ensemble jusqu'à une température suffisante pour éliminer physiquement et/ou chimiquement ledit véhicule et former entre les deux pièces, par réaction desdites particules, une couche médiane de mullite reliée à la pièce ou à chaque pièce en céramique par une couche de transition dont la composition chimique évolue progressivement, avec continuité de structure cristalline, de celle de la mullite à celle de la pièce concernée, et le cas échéant à la pièce métallique par une couche intermédiaire contenant de la mullite, de la silice et un aluminiure du métal de base de l'alliage, à des concentrations qui varient progressivement entre la couche médiane et la pièce métallique.

Bien que l'invention soit plus particulièrement destinée à l'assemblage d'une pièce en céramique et d'une pièce métallique, elle convient tout aussi bien pour l'assemblage mutuel de deux pièces en céramique. Pour qu'une céramique puisse être assemblée par le procédé selon l'invention, il faut qu'elle soit syncristallisable avec la mullite 2SiO₂.3Al₂O₃, c'est-à-dire qu'il existe, entre la composition chimique de cette céramique et celle de la mullite, une gamme continue de compositions cristallisables, avec continuité de structure cristalline dans toute cette gamme. La syncristallisation peut être directe ou indirecte. Dans le second cas, la couche intermédiaire passe par au moins une formule définie autre que celles de la pièce en céramique et de la mullite, par exemple SiO₂ pour une pièce en carbure de silicium.

Dans le cas où la pièce est elle-même en mullite, l'évolution progressive de la composition chimique de la couche de transition peut se réduire à une homogénéité de cette composition.

Dans le cas d'une pièce métallique, il se produit une aluminisation du métal de base et une disparition de l'aluminium métallique, évitant ainsi les inconvénients des brasures.

Les espèces ainsi obtenues résistent à des températures très supérieures aux températures de fusion des ingrédients de la composition de scellement, et supérieures dans certains cas à la température de fusion des alliages à assembler. Ainsi, la mullite se décompose à 1810 °C et la phase βNiAl fond à 1638 °C, alors que la température de fusion des superalliages à base de nickel est d'environ 1550 °C.

D'autres caractéristiques, complémentaires ou alternatives, de l'invention sont énoncées ci-après :
- La seconde pièce est en alliage à base de nickel et ledit aluminiure est βNiAl.
- La seconde pièce est en alliage à base de nickel, de cobalt et/ou de fer et présente un revêtement contenant au moins un métal de la mine du platine. Dans ce cas, l'aluminiure de la couche intermédiaire est modifié par le métal de la mine du platine.
- La céramique est choisie parmi l'alumine, la zircone, la zircone partiellement stabilisée à l'yttrine, la silice, les carbures de silicium, de chrome et de tungstène, et les mélanges de ces composés.
- Le métal modérateur est choisi parmi le chrome, le nickel et le fer et les mélanges de ceux-ci.
- Les fines particules de la composition de scellement contiennent, en masse, 70 à 90 % d'aluminium, 5 à 25 % de silicium, 0 à 5 % de silice et 0,1 à 5 % de métal modérateur.
- Les fines particules de la composition de scellement contiennent, en masse, 30 à 70 % d'aluminium, 0 à 25 % de silicium, 0 à 10 % de silice et 0,1 à 68 % de métal modérateur. Une telle composition convient notamment lorsque la seconde pièce est en un matériau métallique ayant une forte affinité pour l'aluminium, par exemple un métal de la mine du platine sensiblement pur. Dans les deux cas, l'aluminium et le métal modérateur peuvent être au moins en partie préalliés.
- Ledit véhicule comprend un liant organique dissous dans un solvant, qui peut être simplement de l'eau, pour former à température ambiante un liquide visqueux à action défloculante, et si nécessaire un liant minéral qui est sous forme d'un liquide visqueux à la température de décomposition du liant organique. La composition de scellement peut ainsi être étalée à la manière d'une peinture sur les surfaces à solidariser, et/ou versée dans une cavité de l'une des pièces destinées à recevoir l'autre pièce, avant ou après la mise en place de cette autre pièce. En particulier, le liant minéral est superflu lorsque la cavité est fermée vers le bas de telle sorte que la composition de scellement ne puisse pas couler pendant le traitement thermique. Le cas échéant, on peut appliquer deux compositions de scellement différentes sur les deux pièces. De même, il est possible de verser dans la cavité résiduelle obtenue après la mise en place une composition de scellement différente de celle(s) appliquée(s) préalablement sur les deux pièces. En particulier, la composition appliquée sur une pièce en céramique peut être ajustée en fonction de la nature chimique de cette dernière de façon à favoriser la syncristallisation.
- Le liant minéral est choisi parmi les acides borique et phosphorique et leurs sels de chrome, d'aluminium et des métaux du groupe VIIIa de la classification périodique, et les mélanges de ceux-ci. Les éléments constituant les cations de ces composés, et le bore, sont compatibles avec les poudres de la composition de scellement, et le phosphore s'élimine sous forme de laitier rejeté à la surface libre du joint d'assemblage.
- Après avoir juxtaposé les deux pièces, on évapore le solvant à l'air à une température inférieure à 100 °C, puis on chauffe l'ensemble, d'abord si nécessaire à l'air à une température inférieure à 400 °C et suffisante pour décomposer le liant organique et amener le cas échéant le liant minéral à l'état liquide, ensuite en atmosphère non oxydante à une température d'au moins 1000 °C pour éliminer le liant minéral éventuel et faire réagir les poudres de la composition de scellement.
- Avant de juxtaposer les deux pièces on applique sur l'une d'elles au moins une ou plusieurs couches de composition de scellement, chaque application pouvant être suivie de tout ou partie des traitements d'évaporation, de décomposition et d'élimination.
- L'assemblage est réalisé sans pressage des deux pièces l'une contre l'autre.

L'invention a également pour objet une composition de scellement convenant pour la mise en oeuvre du procédé tel que défini ci-dessus, contenant de fines particules composées exclusivement d'aluminium et d'un métal modérateur propre à former un alliage avec celui-ci de façon à limiter la réactivité à haute température de l'aluminium vis-à-vis des matériaux desdites pièces, et/ou d'un alliage préformé de ces deux métaux, et optionnellement d'au moins un constituant choisi parmi le silicium et la silice, lesdites particules étant dispersées dans un véhicule propre à les maintenir en place jusqu'à une température à laquelle elles réagissent entre elles et/ou avec lesdits matériaux.

L'invention vise enfin un assemblage, notamment obtenu par le procédé ci-dessus, comprenant une première pièce en céramique et une seconde pièce en un matériau choisi parmi les céramiques et les matériaux métalliques réfractaires et superalliages à base d'au moins un métal choisi parmi le nickel, le cobalt, le fer et les métaux de la mine du platine, et un ciment de scellement garnissant l'intervalle entre les deux pièces, comportant une couche médiane de mullite reliée à la pièce ou à chaque pièce en céramique par une couche de transition dont la composition chimique évolue progressivement, avec continuité de structure cristalline, de celle de la mullite à celle de la pièce concernée, et le cas échéant à la pièce métallique par une couche intermédiaire contenant de la mullite, de la silice et un aluminiure du métal de base de l'alliage, à des concentrations qui varient progressivement entre la couche médiane et la pièce métallique.

### Exemple 1

On prépare le mélange suivant, les relations quantitatives étant données en masse :
12 parties de poudre de silicium dont la granulométrie est comprise entre 30 et 50 µm,
2,5 parties de poudre de silice dont la granulométrie est comprise entre 20 et 50 µm,
82,5 parties de poudre d'aluminium dont la granulométrie est comprise entre 3 et 5 µm,
3 parties de poudre de chrome dont la granulométrie est comprise entre 10 et 20 µm.

Ces proportions sont considérées comme optimales pour l'assemblage d'une pièce en alumine et d'une pièce métallique, le chrome pouvant être remplacé, en totalité ou en partie, par du nickel et/ou du fer.

Ce mélange est dispersé dans une solution aqueuse de polyacrylate d'ammonium commercialisée par la Société COATEX sous la dénomination COATEX P 90. Cette solution contient un sel de fer qui limite la longueur des chaînes polymères. On l'utilise en une quantité suffisante pour obtenir une pâte fluide, par exemple de l'ordre de 50 ml pour 100 g de poudres. Après homogénéisation de la dispersion, on l'étend par une solution molaire d'acide borique en une quantité de l'ordre de 250 ml pour 100 g de poudres. La poudre d'aluminium, passivée par le polyacrylate d'ammonium, ne réagit pas avec la solution acide. Lorsque le mélange est agité, il présente une texture et une fluidité analogues à celles d'une peinture, cette consistance pouvant être ajustée en faisant varier la quantité de solution acide. On applique la dispersion au pinceau sur une face plane d'un bloc d'alumine. On étuve ensuite la pièce à 80 °C pendant 30 minutes pour éliminer l'eau. Après refroidissement, on réalise une seconde couche dans les mêmes conditions. On effectue ensuite un recuit sous air confiné, de manière à limiter la quantité d'oxygène en contact avec l'échantillon, à 350 °C pendant 30 minutes. Cette opération permet de détruire le dispersant organique et de fondre l'acide borique, ce qui permet aux poudres, après le retour à la température ambiante, de rester en contact avec le substrat. L'échantillon est ensuite introduit dans un four électrique sous atmosphère d'hydrogène à 600 °C et porté à 1050 °C pendant quatre heures. La pièce est alors refroidie à l'air jusqu'à la température ambiante. On constate que la céramique est recouverte d'un dépôt gris sombre très adhérent qui résiste à un sablage humide sous une pression de 6 bars.

On réalise les mêmes enductions et les mêmes traitements thermiques sur un échantillon de superalliage à base de nickel du type IN100, préalablement revêtu par voie électrolytique d'une couche de 12 µm d'un alliage composé de 80 % de palladium et de 20 % de nickel en masse, et après sablage humide sous une pression de 6 bars. Par examen micrographique sur coupe, on constate que l'alliage est recouvert d'une couche de (Ni,Pd)Al très adhérente contenant une fine dispersion de silice. Ce revêtement, obtenu sans fusion de l'aluminium, est alumino-formeur, c'est-à-dire qu'il donne naissance, en présence d'oxygène, à une pellicule protectrice d'alumine. Pour l'obtenir, on a reproduit à la surface de l'échantillon les conditions d'une aluminisation haute activité (c'est l'aluminium qui diffuse vers le substrat), le chrome, qui est éliminé dans les suies après le recuit sous hydrogène, ayant servi de métal modérateur.

On applique une nouvelle couche de la même composition de scellement sur chacun des deux échantillons précédents, et on les applique l'un sur l'autre. L'ensemble ainsi obtenu est soumis à l'ensemble des traitements thermiques décrits ci-dessus pour les échantillons séparés, le traitement final à 1050 °C étant suivi d'un choc thermique de cette température à la température ambiante à l'air. Une coupe métallographique de l'assemblage résultant montre une liaison extrêmement adhérente entre la céramique et le superalliage. On y distingue, à partir du superalliage :
- une zone d'inter-diffusion entre le superalliage et le revêtement,
- un revêtement de βNiAl modifié par le palladium, contenant une fine dispersion de silice,
- une zone intermédiaire contenant un peu de chrome a provenant de la composition de scellement, dans laquelle la proportion d'aluminiure diminue progressivement au profit de la mullite obtenue par réaction entre la poudre d'aluminium, l'oxygène de l'acide borique (le bore s'est combiné à l'hydrogène pour former de l'hydrure de bore), la poudre de silicium, la poudre de silice et l'alumine du substrat, et
- une zone d'inter-diffusion entre la mullite et l'alumine.

Le même résultat peut être obtenu par la procédure simplifiée suivante.

Le superalliage IN100 recouvert du revêtement palladium-nickel est recuit pendant deux heures à 850 °C sous un vide meilleur que 10⁻⁵ torr. L'échantillon obtenu, ainsi que l'échantillon d'alumine préalablement sablé, reçoivent deux couches de composition de scellement comme décrit précédemment, mais les échantillons séparés ne subissent pas d'autre traitement thermique que le séchage en étuve des deux couches successives.

La plaque d'alumine, d'une surface de 1 cm², est posée à plat, face revêtue vers le haut, et on y dépose une goutte, soit environ 3 à 4 ml, de composition de scellement, qu'on écrase au moyen d'une face revêtue de la tôle de superalliage. On effectue alors sur l'ensemble la série de traitements thermiques précédemment décrits à 80, 350 et 1050 °C. Il n'est pas nécessaire d'appliquer une pression quelconque sur les pièces à assembler.

L'assemblage a été soumis à des cycles thermiques sous conditions oxydantes : chauffage à 1100 °C à l'air pendant une heure, puis refroidissement par soufflage d'air jusqu'à environ 200 °C en moins de cinq minutes. Après 500 cycles, on constate que l'alumine est fissurée, sa résistance aux chocs thermiques étant très faible par rapport à celle d'un alliage métallique, mais que la liaison céramique-métal en maintient encore la cohésion. Si on examine une coupe micrographique après les 500 chocs thermiques, on distingue, en partant du superalliage :
- la zone d'inter-diffusion entre le revêtement et le superalliage, dont l'épaisseur a un peu augmenté,
- le revêtement d'aluminiure,
- une fine couche d'alumine, d'environ 2 µm d'épaisseur, adhérant fortement à la mullite,
- une zone d'inter-diffusion entre la mullite et l'alumine.

Les cycles thermiques ont augmenté la surface de contact entre le métal et la céramique et par conséquent la solidité de la liaison entre ceux-ci.

### Exemple 2

On reprend la procédure simplifiée de l'exemple 1, en remplaçant l'acide borique de la composition de scellement par l'acide phosphorique H₃PO₄, et en utilisant une pièce métallique en alliage réfractaire à base de nickel, du type Hasteloy X, revêtue d'une couche d'alliage palladium-nickel de 10 µm d'épaisseur.

Après 500 cycles d'oxydation à 1100°C avec chocs thermiques, aucune décohésion n'est constatée.

### Exemple 3

On procède comme dans l'exemple 2, en remplaçant la pièce en alumine par une pièce en carbure de silicium.

On ne constate aucune décohésion de l'assemblage après de nombreux cycles d'oxydation avec chocs thermiques.

### Exemples 4 à 8

Ces exemples diffèrent de l'exemple 2 par la nature de la céramique et de l'alliage, comme indiqué dans le tableau ci-après.

| EXEMPLE | CÉRAMIQUE | ALLIAGE |
|---|---|---|
| 4 | silice | Hasteloy X |
| 5 | zircone partiellement stabilisé | IN100 |
| 6 | zircone partiellement stabilisé | Hasteloy X |
| 7 | mullite | Hasteloy X |
| 8 | alumine | Pt 90 % + Rh 10 % en masse |

Dans tous les cas on a obtenu une liaison capable de résister à 500 cycles au moins d'oxydation avec chocs thermiques sans qu'aucune décohésion soit constatée, ce nombre étant porté à 1000 pour l'exemple 8.

### Exemple 9

En vue de l'assemblage de deux pièces en céramique, plus particulièrement en alumine, on prépare une composition de scellement contenant les mêmes ingrédients que celle de l'exemple 2, seules les proportions relatives des poudres étant modifiées. La quantité d'aluminium, dont on n'a plus besoin pour aluminiser un alliage, est diminuée au profit du silicium et de la silice, de façon à favoriser la formation de mullite. Les proportions en masse sont les suivantes :

| | |
|---|---|
| silicium | 22, |
| silice | 5, |
| aluminium | 70, |
| chrome | 3. |

Après avoir été nettoyées par sablage humide sous 6 bars, les surfaces à assembler sont recouvertes de la dispersion et appliquées l'une sur l'autre. L'ensemble subit un étuvage de 30 min à 80 °C, puis un autre de 30 min à 350 °C, et enfin un recuit de 5 heures sous hydrogène à 1050 °C. On obtient ainsi une liaison entre les deux plaques d'alumine par une couche de mullite.

### Exemple 10

On procède comme dans l'exemple 9, en remplaçant l'une des pièces en alumine par une pièce en mullite. A la suite du traitement, ies deux plaques sont liées entre elles par une couche dont la composition passe progressivement de celle de l'alumine à celle de la mullite.

### Exemples 11 à 13

Ces trois exemples illustrent l'assemblage de pièces ayant des surfaces de contact non planes.

### Exemple 11

On se propose de recouvrir un cylindre en alumine par un alliage de platine à 10 % en masse d'iridium. Plutôt que d'effectuer un dépôt métallique à la surface de l'alumine, on va assembler la pièce en alumine à l'intérieur d'un tube métallique préformé. Après nettoyage de l'intérieur du tube en platine iridié par sablage humide sous 6 bars, on y introduit une quantité convenable de la composition de scellement décrite dans l'exemple 2, puis on insère le cylindre en alumine, la composition occupant l'intervalle annulaire entre les deux pièces. On réalise alors les mêmes traitements thermiques que sur l'assemblage de l'exemple 2. L'ensemble obtenu peut résister plusieurs milliers d'heures dans un milieu liquide corrosif à une température de 1100 °C.

### Exemple 12

On se propose de fixer des implants en carbure de silicium dans des trous ménagés dans un bloc d'alliage réfractaire Hasteloy X, ces implants et ces trous étant filetés pour une bonne liaison mécanique. En raison de la grande différence des coefficients de dilatation thermique, il est nécessaire de laisser un jeu important entre les pièces, de sorte que la liaison purement mécanique ne suffit pas à assurer un assemblage fiable, les implants pouvant se dévisser par suite de vibrations. Pour résoudre ce problème, on a recours au procédé selon l'invention. Après nettoyage par sablage humide, on injecte, à l'aide d'une seringue, la composition de l'exemple 2 dans le trou fileté, puis on y visse la pièce en céramique. Après les traitements thermiques décrits plus haut, on obtient un insert capable de soutenir un bloc métallique de 500 g à haute température.

### Exemple 13

On se propose de fixer dans un trou borgne d'une pièce en alumine des tiges lisses en alliage réfractaire Hasteloy X. Pour éviter l'apparition de porosités dues à l'évaporation du solvant, on diminue la quantité d'eau contenue dans la composition de scellement. A cet effet, après avoir préparé la dispersion du mélange de poudres dans la solution COATEX P 90, comme dans l'exemple 2, on n'y ajoute pas d'eau, mais seulement de l'acide phosphorique pour obtenir une pâte fluide titrant 0,2 M en acide phosphorique. L'aluminium en poudre étant très lubrifiant, il est facile d'introduire l'insert métallique dans le trou garni de cette pâte. Après les traitements thermiques habituels, on obtient un assemblage utilisable à haute température.

### Exemple 14

Cet exemple concerne l'assemblage d'une tige d'alumine et d'un tube de platine pur de masse relativement importante.

Une première tentative a été effectuée en procédant comme dans l'exemple 11, après avoir préalablement traité la tige en alumine avec la composition décrite dans l'exemple 9. On a ainsi observé une violente réaction entre l'aluminium et le platine.

On a alors mis en oeuvre une composition de scellement particulière dans laquelle les poudres de silicium, de silice, d'aluminium et de métal modérateur sont remplacées par une seule poudre de β-NiAl de granulométrie 5 µm.

Dans un premier temps, on traite la tige d'alumine seule comme décrit dans l'exemple 2, mais en utilisant la composition de scellement de l'exemple 9.

Pour l'assemblage proprement dit, on prépare la composition de scellement en défloculant la poudre de β-NiAl dans une solution de COATEX P90 de façon à obtenir une bouillie qui est étendue d'eau désionisée pour former une composition pouvant être étendue au pinceau. La tige d'alumine traitée, et chauffée à 80° C, est enduite de trois couches de cette composition, sans opérations de séchage intermédiaires. L'épaisseur ainsi déposée est de l'ordre de 100 µm, représentant le double du jeu annulaire entre le tube de platine et la tige d'alumine. On enfile ensuite la tige dans le tube en faisant tourner ce dernier, de façon à éliminer l'épaisseur excédentaire de composition de scellement.

L'ensemble est ensuite introduit dans un four électrique sous atmosphère d'hydrogène à 650° C et la température est élevée progressivement à la vitesse de 5° C/min jusqu'à 1050° C. Après un palier de dix heures à cette dernière température, l'ensemble est refroidi sous air.

La liaison entre les deux pièces fait appel aux deux phénomènes suivants :
- diffusion à l'état solide entre la surface de l'alumine enrichie en aluminium et l'aluminiure de nickel, d'une part,
- diffusion à l'état solide entre le platine et l'aluminiure de nickel, d'autre part.

Dans cet exemple, on s'est dispensé de deux éléments utilisés dans les autres exemples, à savoir la présence d'un liant minéral et le recuit d'élimination du liant organique (30 min à 350° C sous air confiné). En fait, le liant minéral est utile lorsqu'il peut y avoir coulure de la composition de scellement, ce qui n'est pas le cas ici car l'élément liant (l'aluminiure de nickel) est confiné à l'intérieur d'un tube. Pour éviter de perdre la composition de scellement, il suffit de disposer le tube et son insert céramique verticalement dans le four, la face ouverte étant dirigée vers le haut. Par voie de conséquence, l'élimination du liant organique se fait sous forme de CH₄ et de H₂O au cours des premiers instants du recuit sous hydrogène vers 650 à 700° C. De plus, cette méthode d'élimination évite la formation d'un film passif d'Al₂O₃ à la surface de l'aluminiure de nickel (c'est un alliage alumino-formeur) et favorise ainsi la diffusion de ce composé défini avec le platine d'une part et, d'autre part, avec la surface enrichie en aluminium de la tige d'alumine.

Deux échantillons ainsi réalisés ont été recuits sous atmosphère oxydante à 1258° C pendant 100 heures. Aucune anomalie n'a été constatée.

## Revendications

1. Procédé d'assemblage d'une première pièce en céramique et d'une seconde pièce en un matériau choisi parmi les céramiques et les matériaux métalliques réfractaires et superalliages à base d'au moins un métal choisi parmi le nickel, le cobalt, le fer et les métaux de la mine du platine, la céramique constituant la première pièce ou les deux pièces étant propre à syncristalliser, directement ou indirectement, avec la mullite, procédé dans lequel on juxtapose les deux pièces, l'intervalle qui les sépare étant garni d'une composition de scellement contenant de fines particules d'aluminium et d'un métal modérateur propre à former un alliage avec celui-ci de façon à limiter la réactivité à haute température de l'aluminium vis-à-vis des matériaux desdites pièces, et/ou d'un alliage préformé de ces deux métaux, et optionnellement d'au moins un constituant choisi parmi le silicium et la silice, lesdites particules étant dispersées dans un véhicule propre à les maintenir en place jusqu'à une température à laquelle elles réagissent entre elles et/ou avec lesdits matériaux, et on chauffe l'ensemble jusqu'à une température suffisante pour éliminer physiquement et/ou chimiquement ledit véhicule et former entre les deux pièces, par réaction desdites particules, une couche médiane de mullite reliée à la pièce ou à chaque pièce en céramique par une couche de transition dont la composition chimique évolue progressivement, avec continuité de structure cristalline, de celle de la mullite à celle de la pièce concernée, et le cas échéant à la pièce métallique par une couche intermédiaire contenant de la mullite, de la silice et un aluminiure du métal de base de l'alliage, à des concentrations qui varient progressivement entre la couche médiane et la pièce métallique.

2. Procédé selon la revendication 1, caractérisé en ce que la seconde pièce est en alliage à base de nickel et que ledit aluminiure est βNiAl.

3. Procédé selon l'une des revendications 1 et 2, caractérisé en ce que la seconde pièce est en alliage à base de nickel, de cobalt et/ou de fer et présente un revêtement contenant au moins un métal de la mine du platine.

4. Procédé selon l'une des revendications précédentes, caractérisé en ce que la céramique est choisie parmi l'alumine, la zircone, la zircone partiellement stabilisée à l'yttrine, la silice, les carbures de silicium, de chrome et de tungstène, et les mélanges de ces composés.

5. Procédé selon l'une des revendications précédentes, caractérisé en ce que le métal modérateur est choisi parmi le chrome, le nickel et le fer et les mélanges de ceux-ci.

6. Procédé selon l'une des revendications précédentes, caractérisé en ce que les fines particules de la composition de scellement contiennent, en masse, 70 à 90 % d'aluminium, 5 à 25 % de silicium, 0 à 5 % de silice et 0,1 à 5 % de métal modérateur.

7. Procédé selon l'une des revendications 1 à 5, notamment pour l'assemblage d'une seconde pièce en un matériau métalliques ayant une forte affinité pour l'aluminium, caractérisé en ce que les fines particules de la composition de scellement contiennent, en masse, 30 à 70 % d'aluminium, 0 à 25 % de silicium, 0 à 10 % de silice et 0,1 à 68 % de métal modérateur.

8. Procédé selon l'une des revendications précédentes, caractérisé en ce que ledit véhicule comprend un liant organique dissous dans un solvant pour former à température ambiante un liquide visqueux à action défloculante, et si nécessaire un liant minéral qui est sous forme d'un liquide visqueux à la température de décomposition du liant organique.

9. Procédé selon la revendication 8, caractérisé en ce que ledit solvant est l'eau.

10. Procédé selon l'une des revendications 8 et 9, caractérisé en ce que le liant minéral est choisi parmi les acides borique et phosphorique et leurs sels de chrome, d'aluminium et des métaux du groupe VIIIa de la classification périodique, et les mélanges de ceux-ci.

11. Procédé selon l'une des revendications 8 à 10, caractérisé en ce que, après avoir juxtaposé les deux pièces, on évapore le solvant à l'air à une température inférieure à 100 °C, puis on chauffe l'ensemble, d'abord si nécessaire à l'air à une température inférieure à 400 °C et suffisante pour décomposer le liant organique et amener le cas échéant le liant minéral à l'état liquide, ensuite en atmosphère non oxydante à une température d'au moins 1000 °C pour éliminer le liant minéral éventuel et faire réagir les poudres de la composition de scellement.

12. Procédé selon la revendication 11, caractérisé en ce qu'avant de juxtaposer les deux pièces on applique sur l'une d'elles au moins une ou plusieurs couches de composition de scellement, chaque application pouvant être suivie de tout ou partie des traitements d'évaporation, de décomposition et d'élimination.

13. Procédé selon l'une des revendications précédentes, caractérisé en ce que l'assemblage est réalisé sans pressage des deux pièces l'une contre l'autre.

14. Composition de scellement convenant pour la mise en oeuvre du procédé selon l'une des revendications précédentes, contenant de fines particules composées exclusivement d'aluminium et d'un métal modérateur propre à former un alliage avec celui-ci de façon à limiter la réactivité à haute température de l'aluminium vis-à-vis des matériaux desdites pièces, et/ou d'un alliage préformé de ces deux métaux, et optionnellement d'au moins un constituant choisi parmi le silicium et la silice, lesdites particules étant dispersées dans un véhicule propre à les maintenir en place jusqu'à une température à laquelle elles réagissent entre elles et/ou avec lesdits matériaux.

15. Assemblage comprenant une première pièce en céramique et une seconde pièce en un matériau choisi parmi les céramiques et les matériaux métalliques réfractaires et superalliages à base d'au moins un métal choisi parmi le nickel, le cobalt, le fer et les métaux de la mine du platine, et un ciment de scellement garnissant l'intervalle entre les deux pièces, comportant une couche médiane de mullite reliée à la pièce ou à chaque pièce en céramique par une couche de transition dont la composition chimique évolue progressivement, avec continuité de structure cristalline, de celle de la mullite à celle de la pièce concernée, et le cas échéant à la pièce métallique par une couche intermédiaire contenant de la mullite, de la silice et un aluminiure du métal de base de l'alliage, à des concentrations qui varient progressivement entre la couche médiane et la pièce métallique.

16. Assemblage selon la revendication 15, caractérisé en ce qu'il est obtenu par le procédé selon l'une des revendications 1 à 13.

## Patentansprüche

1. Verfahren zur Verbindung eines ersten Teils aus Keramik und eines zweiten Teils aus einem Material, ausgewählt unter den Keramiken und den hitzebeständigen metallischen Materialien und Superlegierungen auf der Basis von wenigstens einem unter Nickel, Kobalt, Eisen und den Metallen der Platingruppe ausgewählten Metall, wobei die das erste Teil oder die beiden Teile bildende Keramik sich direkt oder indirekt zur Mischkristallbildung mit dem Mullit eignet und man bei diesem Verfahren die beiden Teile nebeneinanderstellt bzw. -legt, wobei der sie trennende Zwischenraum mit einer Verschmelzungszusammensetzung gefüllt wird, die feine Partikel aus Aluminium und einem moderierenden Metall enthält, geeignet mit diesem eine Legierung zu bilden, um die Reaktionsfähigkeit des Aluminiums bei hoher Temperatur gegenüber den Materialien der genannten Teile zu begrenzen, und/oder mit einer aus diesen beiden Metallen vorgebildeten bzw. im voraus gebildeten Legierung, und wahlweise wenigstens eine Komponente, gewählt zwischen Silizium und Siliziumdioxid, wobei besagte Partikel in einem Vehikel feinst verteilt sind, das ihre Verteilung aufrechterhalten kann, bis eine Temperatur erreicht ist, bei der sie miteinander und/oder mit den genannten Materialien reagieren, und man das Ganze auf eine Temperatur erhitzt, die ausreicht, das genannte Vehikel physikalisch und/oder chemisch zu eliminieren und zwischen den beiden Teilen durch Reaktion der genannten Partikel eine Mittelschicht aus Mullit zu bilden, die mit dem Teil oder mit jedem Teil aus Keramik durch eine Übergangsschicht verbunden ist, deren chemische Zusammensetzung sich progressiv entwickelt, mit Kontinuität der Kristallstruktur, von der des Mullits zu der des betreffenden Teils, und gegebenenfalls zu dem metallischen Teil durch eine Zwischenschicht, die Mullit, Siliziumdioxid und eine Aluminiumverbindung des Basismetalls der Legierung enthält, mit Konzentrationen, die sich progressiv zwischen der Mittelschicht und dem metallischen Teil verändern.

2. Verfahren nach Anspruch 1, dadurch gekennzeichnet, daß das zweite Teil aus einer Legierung auf Nickelbasis ist und daß die genannte Aluminiumverbindung βNiAl ist.

3. Verfahren nach einem der Ansprüche 1 und 2, dadurch gekennzeichnet, daß das zweite Teil aus einer Legierung auf Nickel-, Kobalt- und/oder Eisenbasis ist und einen Überzug aufweist, der wenigstens ein Metall der Platingruppe enthält.

4. Verfahren nach einem der vorangehenden Ansprüche, dadurch gekennzeichnet, daß die Keramik ausgewählt wird unter Aluminiumoxid, Zirkon, partiell yttriumstabilsiertem Zirkon, Siliziumdioxid, den Silizium-, Chrom- und Wolframkarbiden und den Mischungen dieser Verbindungen.

5. Verfahren nach einem der vorangehenden Ansprüche, dadurch gekennzeichnet, daß das moderierende Metall ausgewählt wird unter Chrom, Nickel und Eisen und den Mischungen von diesen.

6. Verfahren nach einem der vorangehenden Ansprüche, dadurch gekennzeichnet, daß die feinen Partikel der Verschmelzungszusammensetzung in Masseanteilen 70 bis 90 % Aluminium, 5 bis 25 % Silizium, 0 bis 5 % Siliziumdioxid und 0,1 bis 5 % des moderierenden Metalls enthalten.

7. Verfahren nach einem der Ansprüche 1 bis 5, insbesondere für die Verbindung mit einem zweiten Teil aus einem metallischen Material mit einer starken Affinität zum Aluminium, dadurch gekennzeichnet, daß die feinen Partikel der Verschmelzungszusammensetzung in Masseanteilen 30 bis 70 % Aluminium, 0 bis 25 % Silizium, 0 bis 10 % Siliziumdioxid und 0,1 bis 68 % des moderierenden Metalls enthalten.

8. Verfahren nach einem der vorangehenden Ansprüche, dadurch gekennzeichnet, daß das genannte Vehikel einen in einem Lösungsmittel aufgelösten organischen Binder umfaßt, um bei Umgebungstemperatur eine viskose Flüssigkeit mit entflockender Wirkung zu bilden, und wenn nötig einen anorganischen Binder in Form einer bei der Auflösungstemperatur des organischen Binders viskosen Flüssigkeit.

9. Verfahren nach Anspruch 8, dadurch gekennzeichnet, daß das genannte Lösungsmittel Wasser ist.

10. Verfahren nach einem der Ansprüche 8 und 9, dadurch gekennzeichnet, daß der anorganische Binder ausgewählt wird unter den Bor- und Phosphorsäuren und ihren Chrom-, Aluminium- und Metallsalzen der Metalle der Gruppe VIIIa des Periodensystems, und den Mischungen von diesen.

11. Verfahren nach einem der Ansprüche 8 bis 10, dadurch gekennzeichnet, daß man, nachdem man die beiden Teile nebeneinandergestellt bzw. -gelegt hat, das Lösungsmittel bei einer Temperatur unter 100°C in Luft verdampft, dann das Ganze zunächst wenn nötig in Luft auf eine Temperatur unter 400°C erhitzt, die ausreicht, um den organischen Binder aufzulösen und gegebenenfalls den anorganischen Binder in den flüssigen Zustand zu bringen, und anschließend in nicht oxidierender Atmosphäre auf eine Temperatur unter 1000°C erhitzt, um den eventuellen anorganischen Binder zu eliminieren und die Pulver der Verschmelzungszusammensetzung reagieren zu lassen.

12. Verfahren nach Anspruch 11, dadurch gekennzeichnet, daß man vor dem Nebeneinanderstellen bzw. -legen der beiden Teile auf wenigstenss einem von beiden eine oder mehrere Schichten der Verschmelzungszusammensetzung aufbringt, wobei auf jedes Aufbringen alle oder ein Teil der Verdampfungs-, Auflösungs- und Eliminierungsbehandlungen folgen kann.

13. Verfahren nach einem der vorangehenden Ansprüche, dadurch gekennzeichnet, daß die Verbindung ohne ein Zusammenpressen der beiden Teile erfolgt,

14. Verschmelzungszusammensetzung, geeignet zur Durchführung des Verfahrens nach einem der vorangehenden Ansprüche, feine Partikel enthaltend, ausschließlich aus Aluminium und einem moderierenden Metall, das geeignet ist, mit diesem eine Legierung zu bilden, um die Reaktionsfähigkeit des Aluminiums bei hoher Temperatur gegenüber den Materialien der genannten Teile zu begrenzen, und/oder eine aus diesen beiden Metallen vorher gebildete Legierung, und wahlweise wenigstens eine Komponente, gewählt zwischen Silizium und Siliziumdioxid, wobei besagte Partikel in einem Vehikel feinst verteilt sind, das ihre Verteilung aufrechterhalten kann, bis eine Temperatur erreicht ist, bei der sie miteinander und/oder mit den genannten Materialien reagieren.

15. Verbindung, ein erstes Teil aus Keramik umfassend und ein zweites Teil aus einem Material, ausgewählt unter den Keramiken und den hitzebeständigen metallischen Materialien und Superlegierungen auf der Basis von wenigstens einem unter Nickel, Kobalt, Eisen und den Metallen der Platingruppe ausgewählten Metall und einem den Zwischenraum zwischen den beiden Teilen füllenden Verschmelzungszement, eine Mittelschicht aus Mullit umfassend, die mit dem Teil oder mit jedem Teil aus Keramik durch eine Übergangsschicht verbunden ist, deren chemische Zusammensetzung sich progressiv entwickelt, mit Kontinuität der Kristallstruktur, von der des Mullits zu der des betreffenden Teils, und gegebenenfalls zu dem metallischen Teil durch eine Zwischenschicht, die Mullit, Siliziumdioxid und eine Aluminiumverbindung des Basismetalls der Legierung enthält, mit Konzentrationen, die sich progressiv zwischen der Mittelschicht und dem metallischen Teil verändern.

16. Verbindung nach Anspruch 15, dadurch gekennzeichnet, daß sie durch das Verfahren nach einem der Ansprüche 1 bis 13 hergestellt wird.

## Claims

1. A process for assembling a first ceramic component and a second component of a material selected from ceramic materials and refractory metal materials and superalloys based on at least one metal selected from nickel, cobalt, iron and platinum ore metals, the ceramic material constituting the first component or the two components being capable of direct or indirect syncrystallisation with mullite, said process comprising the juxtaposition of the two components, the space separating them being filled with a grouting composition containing fine particles of aluminium and of a moderating metal capable of forming an alloy therewith so as to limit the high-temperature reactivity of the aluminium with respect to the materials of said components, and/or of a preformed alloy of these two metals, and optionally of at least one constituent selected from silicon and silica, said particles being dispersed in a carrier capable of keeping them in place until a temperature is reached at which they react together and/or with said materials, the assembly being heated to a temperature which is high enough to eliminate said carrier physically and/or chemically and to form between the two components, by reaction of said particles, a median layer of mullite connected to the component or each component of ceramic material by a transitional layer, the chemical composition of which develops progressively, while maintaining continuity of the crystalline structure, from that of the mullite to that of the component concerned, and, if relevant, to the metal component by an intermediate layer containing mullite, silica and an aluminide of the metal forming the basis of the alloy, in concentrations which vary progressively between the median layer and the metal component.

2. A process according to claim 1, characterised in that the second component is made of a nickel-based alloy and in that said aluminide is βNiAl.

3. A process according to either one of claims 1 and 2, characterised in that the second component is made of a nickel-, cobalt- and/or iron-based alloy and comprises a coating containing at least one platinum ore metal.

4. A process according to any one of the preceding claims, characterised in that the ceramic material is selected from alumina, zirconia, zirconia which has been partially stabilised with yttria, silica, carbides of silicon, chromium and tungsten and mixtures of these compounds.

5. A process according to any one of the preceding claims, characterised in that the moderating metal is selected from chromium, nickel and iron and mixtures thereof.

6. A process according to any one of the preceding claims, characterised in that the fine particles of the grouting composition contain from 70 to 90 wt.% aluminium, from 5 to 25 wt.% silicon, from 0 to 5 wt.% silica and from 0.1 to 5 wt.% of moderating metal.

7. A process according to any one of claims 1 to 5, in particular for assembling a second component of a metal material with a strong affinity for aluminium, characterised in that the fine particles of the grouting composition contain from 30 to 70 wt.% aluminium, from 0 to 25 wt.% silicon, from 0 to 10 wt.% silica and from 0.1 to 68 wt.% of moderating metal.

8. A process according to any one of the preceding claims, characterised in that said carrier comprises an organic binder dissolved in a solvent to form at ambient temperature a viscous deflocculating liquid and, if necessary, a mineral binder which takes the form of a viscous liquid at the decomposition temperature of the organic binder.

9. A process according to claim 8, characterised in that said solvent is water.

10. A process according to either one of claims 8 and 9, characterised in that the mineral binder is selected from boric and phosphoric acids and their salts of chromium, aluminium and metals from group VIIIa of the Periodic Table, and mixtures thereof.

11. A process according to any one of claims 8 to 10, characterised in that, once the two components have been juxtaposed, the solvent is evaporated in air at a temperature of below 100°C and then the assembly is heated, firstly, if necessary, in air to a temperature of below 400°C sufficient to decompose the organic binder and, if relevant, to bring the mineral binder into the liquid state and then in a non-oxidising atmosphere to a temperature of at least 1000°C to eliminate the optional mineral binder and to cause the powders of the grouting composition to react.

12. A process according to claim 11, characterised in that, prior to juxtaposition of the two components, one or more layers of grouting composition are applied to at least one thereof, each application optionally being followed by all or some of the evaporation, decomposition and elimination treatments.

13. A process according to any one of the preceding claims, characterised in that the assembly is made without pressing the two components against each other.

14. A grouting composition suitable for implementation of the process according to any one of the preceding claims, containing fine particles composed exclusively of aluminium and of a moderating metal capable of forming an alloy therewith so as to limit the high-temperature reactivity of the aluminium with respect to the materials of said components, and/or of a preformed alloy of these two metals, and optionally of at least one constituent selected from silicon and silica, said particles being dispersed in a carrier capable of keeping them in place until a temperature is reached at which they react together and/or with said materials.

15. An assembly comprising a first ceramic component and a second component of a material selected from ceramic materials and refractory metal materials and superalloys based on at least one metal selected from nickel, cobalt, iron and platinum ore metals, and a grouting cement filling the space between the two components, comprising a median layer of mullite connected to the component or each component of ceramic material by a transitional layer, the chemical composition of which develops progressively, while maintaining continuity of the crystalline structure, from that of the mullite to that of the component concerned, and, if relevant, to the metal component by an intermediate layer containing mullite, silica and an aluminide of the metal forming the basis of the alloy, in concentrations which vary progressively between the median layer and the metal component.

16. An assembly according to claim 15, characterised in that it is obtained by the process according to any one of claims 1 to 13.
